# DEMANDE DE BREVET EUROPEEN

(11) **EP 0 723 942 A1**
(43) Date de publication de la demande: **31.07.1996**
(21) Numéro de dépôt: 96400190.3
(22) Date de dépôt: 26.01.1996
(51) Int. Cl.: C03C 17/30, G01K 5/22

(54) **Procédé de traitement d'un verre pour diminuer sa mouillabilité par le gallium et appareil fabriqué à partir d'un verre ainsi traité**

(30) Priorité: 30.01.1995 FR 9501014
(71) Demandeur: RHONE-POULENC CHIMIE DE BASE, 92408 Courbevoie (FR)
(72) Inventeur: Lauvray, Hubert, F-75017 Paris (FR); Maurice, Jean-Charles, F-94170 Le Perreux-sur-Marne (FR); Sabot, Jean-Louis, F-78600 Maisons-Laffitte (FR)
(74) Mandataire: Dubruc, Philippe

(57) **Abrégé**

L'invention concerne un pocédé de traitement d'un verre pour diminuer ou supprimer sa mouillabilité par le gallium ou un alliage à base de gallium, caractérisé en ce qu'on traite le verre par un agent silylant.

L'invention concerne aussi un appareil du type comportant au moins un élément creux en verre dans lequel est contenu ou peut circuler du gallium ou un alliage à base de gallium, caractérisé en ce que le verre formant l'élément creux a subi un traitement selon le procédé précité. Cet appareile peut être du type thermomètre, baromètre ou interrupteur électrique.

## Description

La présente invention concerne un procédé de traitement d'un verre pour diminuer ou supprimer sa mouillabilité par le gallium et un appareil fabriqué à partir d'un verre ainsi traité.

Les applications du mercure à l'état liquide sont nombreuses. C'est le cas par exemple des thermomètres et des baromètres. Cependant, en raison du caractère toxique de cet élément, on cherche un produit de substitution et ceci est tout particulièrement important pour les instruments utilisés par le grand public de façon à limiter ou éviter la dispersion du mercure dans l'environnement.

Le gallium ou des alliages riches en gallium ont été proposés. Leur point de fusion en font des liquides susceptibles de remplacer le mercure dans les thermomètres. En outre, le gallium et le mercure présentent une grande analogie de leur propriétés physiques.

Toutefois, le gallium et ses alliages présentent un inconvénient majeur. Ils mouillent en effet le verre au point de former sur celui-ci un film adhérant de façon pratiquement irréversible. Un tel comportement rend totalement inutilisables le gallium et ses alliages dans les applications évoquées plus haut.

La substitution du gallium au mercure pose donc dans ce cas un réel problème.

L'objet de la présente invention est de résoudre ce problème.

Dans ce but, le procédé selon l'invention de traitement d'un verre pour diminuer ou supprimer sa mouillabilité par le gallium ou un alliage à base de gallium, est caractérisé en ce qu'on traite le verre par un agent silylant.

Par ailleurs, l'invention concerne un appareil du type comportant au moins un élément en verre en contact ou susceptible d'être en contact avec du gallium ou un alliage à base de gallium et qui est caractérisé en ce que le verre formant ledit élément a subi un traitement selon le procédé précité.

D'autres caractéristiques, détails et avantages de l'invention apparaîtront encore plus complètement à la lecture de la description qui va suivre, ainsi que d'un exemple concret mais non limitatif destiné à l'illustrer.

L'invention réside dans un procédé de traitement du verre. On sait que le verre présente une chimie de surface spécifique entraînant des phénomènes de chimisorption. Sans vouloir être lié par une théorie, on peut penser que lors de la mise en contact du gallium ou d'un alliage à base de gallium avec le verre, il va s'établir des interactions ou des réactions chimiques entre ceux-ci. L'origine de ces interactions ou réactions peut se trouver dans la présence à la surface du verre des groupements silanol Si-OH qui peuvent se présenter dans la configuration suivante :

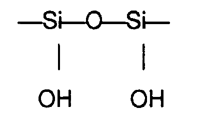

Le procédé de l'invention a pour effet de transformer les liaisons Si-OH de manière à les rendre inactives vis à vis du gallium.

On précise ici et pour l'ensemble de la description que l'invention s'applique au cas du gallium mais aussi à tous les alliages à base de gallium susceptibles d'être utilisés dans les applications concernées. Par la suite le terme gallium devra s'entendre comme concernant aussi les alliages à base de cet élément.

Les alliages seront choisis en fonction des propriétés physiques nécessaires pour l'application recherchée, notamment le point de fusion, le point d'ébullition et la tension de vapeur.

On peut citer comme alliages plus particulièrement ceux à base de gallium et d'indium, ces alliages pouvant contenir d'autres éléments dans des proportions moindres comme notamment l'étain, l'argent, le bismuth et l'antimoine. A titre d'exemple on peut mentionner les alliages de proportions en poids suivantes : Ga 59-95%, In 5-25%, Sn 0-16%, les autres éléments cités plus haut pouvant être présents dans des quantités allant jusqu'à 5% environ.

Par ailleurs, la présente invention s'applique à tous les verres dans la mesure où ceux-ci sont susceptibles de présenter en surface des groupements silanols ou plus généralement des groupements hydroxy -OH. On pourra citer plus particulièrement les verres à base de SiO₂ ainsi que ceux du type silicate comprenant, outre SiO₂, au moins un autre élément choisi parmi Al₂O₃, B₂O₃, Li₂O₃, Na₂O, K₂O, MgO, CaO, BaO, PbO et ZnO notamment, SiO₂ étant un élément majoritaire ou non. On pourra citer encore plus particulièrement les verres borosilicatés.

Le traitement du verre selon l'invention se fait en utilisant un agent silylant. Par agent silylant, on entend tout agent capable de déplacer l'hydrogène d'une liaison M-OH, M étant un élément chimique rentrant dans la composition du verre, par exemple Si, par un groupe silyle.

Les agents silylants sont bien connus. Il s'agit généralement d'halogénures de trialkyl silane ou de composés silane comprenant de l'azote. On peut citer par exemple le triméthylchlorosilane (TMCS), le diméthylchlorosilane (DMCS), le triméthyliodosilane, l'hexaméthyldisilazane (HMDZ), le chlorométhyldimethylchlorosilane, le N, N'-bis(triméthylsilyl)urée, le N-triméthylsilyldiéthylamine, leN-triméthylsilylimidazole, le N, O-bis(triméthylsilyl)acétimide (BSA), le N, O-bis(triméthylsilyl)trifluoroacétamide, le N-méthyl-N triméthylsilyltrifluoroacétamide, le t-butyldiméthylsilylimidazole, le N-triméthylsilylacétamide, le N, O bis(triméthylsilyl)carbamate.

Le traitement du verre peut se faire par toute méthode convenable. Ce traitement peut consister à mettre en contact le verre avec une solution contenant l'agent silylant. Préalablement, le verre peut avoir été lavé à l'eau et/ou dégraissé avec un solvant organique. Ce traitement peut se faire à une température comprise entre l'ambiante et 80°C. A l'issue de ce traitement, on peut prévoir un rinçage supplémentaire du verre avec un solvant organique pour éliminer l'excès d'agent silylant, ce rinçage étant suivi d'un séchage. Ce séchage peut se faire à une température comprise entre 60 et 120°C.

L'invention concerne aussi un appareil du type comportant au moins un élément en verre en contact ou susceptible dêtre en contact avec du gallium ou un alliage à base de gallium et dont le verre a été traité de la manière décrite plus haut.

L'élément peut être plus particulièrement un élément creux dans lequel est contenu ou peut circuler du gallium, comme par exemple un capillaire, un tube ou un réservoir. L'appariel peut par exemple être un thermomètre, un baromètre ou en encore un interrupteur électrique.

Selon un mode de réalisation particulier de l'invention et dans le cas d'un élément creux du type précité ou délimitant un espace contenant ou susceptible de recevoir le gallium, on fait en sorte que l'atmosphère dans cet élément est telle que sa teneur en oxygène est d'au plus 20 ppm, par exemple entre 10 et 20 ppm et de préférence d'au plus 2 ppm. Pour vérifier de telles conditions, l'élément en verre peut contenir un gaz inerte qui peut être par exemple l'argon, l'hélium, l'hydrogène ou l'azote. Ce gaz inerte évitera l'oxydation du gallium.

Enfin, l'invention concerne la fabrication d'un appareil du type décrit plus haut en utilisant un verre ayant subi un traitement selon le procédé qui a été décrit.

Un exemple non limitatif va maintenant être donné.

### EXEMPLE

Un flacon en verre du type "Pyrex" de 100ml est soumis au traitement suivant :
- lavage et dégraissage de la surface à l'aide d'une solution de Décon® à 10% dans l'eau;
- rinçage à l'eau;
- rinçage à l'acétone;
- séchage à l'étuve à 90°C;
- lavage à 70°C pendant une heure avec un agent de silylation (le N, O-bis(triméthylsilyl)trifluoroacétamide) à 60% dans de l'acétonitrile à moins de 0,01% d'eau;
- lavage avec de l'acétonitrile, puis avec du méthanol jusqu'à pH 7;
- rinçage à l'acétone;
- séchage à l'étuve à 90°C.
10g de gallium de pureté supérieure à 99% sont introduit dans ce flacon qui est soumis à une vive agitation. Dès l'arrêt de cette agitation, le gallium se rassemble au fond du flacon.

Après le même test sans traitement du verre, le gallium adhère sous forme d'un film mince sur l'ensemble de la paroi du flacon.

## Revendications

1. Procédé de traitement d'un verre pour diminuer ou supprimer sa mouillabilité par le gallium ou un alliage à base de gallium, caractérisé en ce qu'on traite le verre par un agent silylant.

2. Procédé selon la revendication 1, caractérisé en ce qu'on traite le verre par trempage de celui-ci dans une solution contenant un agent silylant.

3. Appareil du type comportant au moins un élément creux en verre dans lequel est contenu ou peut circuler du gallium ou un alliage à base de gallium, caractérisé en ce que le verre formant l'élément creux a subi un traitement selon le procédé de la revendication 1 ou 2.

4. Appareil selon la revendication 3, caractérisé en ce que l'élément creux contient en outre un gaz inerte.

5. Appareil selon la revendication 3 ou 4, du type thermomètre, baromètre ou interrupteur électrique.

6. Procédé de fabrication d'un appareil selon la revendication 3 ou 4, caractérisé en ce qu'on utilise un verre ayant subi un traitement selon le procédé de la revendication 1 ou 2.
